(19) Europäisches Patentamt
European Patent Office
Office européen des brevets

(11) **EP 2 952 994 A1**

(12) **EUROPEAN PATENT APPLICATION**

(43) Date of publication:
**09.12.2015 Bulletin 2015/50**

(51) Int Cl.:
**G05D 1/02** (2006.01)　　　　**B63H 25/42** (2006.01)

(21) Application number: **14171009.5**

(22) Date of filing: **03.06.2014**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(71) Applicant: **GE Energy Power Conversion<br>Technology Ltd<br>Rugby<br>Warwickshire CV21 1BU (GB)** | (72) Inventors:<br>• **Stephens, Richard Ian<br>Rugby, Warwickshire CV21 1BU (GB)**<br>• **Wilkins, Anthony John<br>Rugby, Warwickshire CV21 1BU (GB)**<br><br>(74) Representative: **Serjeants LLP<br>Dock<br>75 Exploration Drive<br>Leicester, LE4 5NU (GB)** |

(54) **System and method for dynamic positioning**

(57)　　　A system for minimizing fuel consumption in a dynamic positioning (DP) vessel comprising a measurement system (110), an observer system (222), a control system (120) and a thruster system (150). The heading of the vessel is adjusted to minimize the environmental forces felt on each side of the vessel. The method also allows for operator input to offset the vessel heading to improve comfort on board.

FIG. 1

## Description

### I. Technical Field

The present disclosure is related to systems and methods for minimizing heading power required by vessels that utilize a dynamic positioning (DP) system.

### II. Background

There have been multiple attempts to rectify the problems associated with minimizing power consumption associated with DP vessels' position and heading control in response to weather related events. One solution controls the heading of a vessel through estimating the port side and starboard side forces through minimizing of the side force demand, i.e. thruster force in the port-starboard direction. Although this solution may provide a more desirable heading than the initial path, this solution can only be used when a vessel is in full DP mode. Additionally, there is a likelihood that the optimal heading controller will be unstable in heavy weather conditions due to the increased rate of change of aim heading.

### III. Summary

A DP system is inherently energy intensive because the DP system counteracts the forces due to weather. Therefore inefficiency in heading control and heading stability are specific areas of concern with DP systems. These forces vary dramatically depending on a measure of deviation on the vessel (e.g., angle of incidence). Even small offsets in the optimal heading angle of a vessel will result in an increased demand for thrust power. For most vessels, pointing the bow into wind and/or current reduces the environmental forces, and thus reduces the power demand of the thrusters. In addition, based on the aforementioned shortcomings associated with minimizing thruster power used by a DP vessel, there exists a need for systems and methods to allow adjustments in DP heading when the DP controller is controlling heading using measurements of environmental forces and for stabilizing the heading during severe weather.
Additionally, system and methods described herein allow for operator specified data for use in choosing a comfortable heading and automatically adjust heading gains when weather conditions are severe.

One benefit of energy-efficient DP systems and methods is it reduces the amount of force felt on a vessel due to environmental conditions through heading control. The system and methods are designed to alter vessel heading based on the measured applied side force rather than the side force demand on the vessel. Using side force demand alone to determine a desirable vessel heading can cause a vessel to expend unneeded energy and consume additional fuel.

In the present disclosure, the systems and the methods estimate the vessel side force through the use of an observer system, which may be a linear quadratic estimation program (LQE), also known as a Kalman filter. Measurements of position and heading are supplied to the observer system. In certain embodiments, the observation system applies a wave filter program to remove measurement noise associated with wave motions and thereby produces estimates of position and velocity excluding wave motions.

Estimates of vessel position, vessel velocity, and weather forces are transmitted to the control system, which calculates thrust demands that maintain the vessel position and heading. The control of the vessel heading ensures that the side force due to the weather is minimized.

In certain embodiments, the observer system is also supplied with weather information. For example, measurements from one or more anemometers are used to estimate the wind forces on the vessel and are fed to the observer to improve its estimates of weather forces.

In other embodiments, the observer system receives only weather information which it uses to provide estimates of the weather forces on the vessel.

In certain embodiments, if some or all of the measurements provided to the observer system are absent, the observer system continues to provide estimates of environmental forces on the vessel.

In other embodiments, the systems and the methods allow for automatic adjustment to the heading gains according to the weather conditions. When the weather forces on the vessel are large, during periods of heavy weather (high winds, high current or large waves), there is a possibility that the heading control program will become unstable, causing large oscillations in the heading. Large oscillations can be avoided by reducing a speed of response of the heading adjustment program as the weather forces increase. Another benefit is the ability to use the systems and the methods when parameters of the vessel direction are under manual control, i.e., the vessel is not in full DP mode. In full DP mode, the heading axis and the sway axis are both under full control of the DP system because the demanded sway force drives the heading change. In contrast, in certain embodiments described herein, only the heading axis is under control of the DP system. In such embodiments, the change in heading direction is driven from the LQE estimation of force from the side force, i.e., port-starboard direction. Although the side force affects the heading change, the method to be used even if the sway direction of motion is under manual control.

Another benefit is the ability to allow for adjustment of the heading. The systems and the methods of the present disclosure include a means for an operator to provide input to specify an offset to the heading determined by the DP system. The operator input may be utilized to select a heading that is more comfortable to occupants of the vessel.

Yet another benefit of the systems and the methods is the applicability to vessels that are not ship-shaped. In the present disclosure, the systems and the methods can be used on any vessel that is subject to side force.

In one embodiment a dynamic positioning system comprises: a controller, comprising: a processor; and a memory having stored thereon computer-executable instructions which, when executed by the processor, cause the processor to perform operations comprising: calculating, by the processor: a sum value based on a sum of one or more measured values of sway environmental force; a multiplied value based on a product of the sum value and a controller gain; a heading offset angle based on an integral of the multiplied value over time; and an aim heading based on a sum of an initial heading and the heading offset angle.

The memory can have stored thereon computer-executable instructions which, when executed by the processor, cause the processor to perform operations comprising generating a thruster control signal based on the aim heading.

The memory can have stored thereon computer-executable instructions which, when executed by the processor, cause the processor to perform operations comprising: calculating a sway force offset based on a tangent of an operator offset angle multiplied by a measured value of surge environmental force; calculating the sum value based on a sum of: the one or more measured values of sway environmental force; and the sway force offset.

The memory can have stored thereon computer-executable instructions which, when executed by the processor, cause the processor to perform operations comprising: calculating an offset gain based on a sway wind force coefficient and a surge wind force coefficient; and calculating the sway force offset based on the tangent of the operator offset angle, multiplied by the measured value of surge environmental force, and multiplied by the offset gain.

The memory can have stored thereon computer-executable instructions which, when executed by the processor, cause the processor to perform operations comprising calculating: calculating, a value of a multiplier based on a wind speed divided by the surge environmental force; determining a value of an adjusted value, wherein the value of the adjusted value is: equal to the value of the multiplier if an absolute value of the multiplier is less than one; or equal to one if the absolute value of the multiplier is greater than one; and calculating the multiplied value based on a product of the sum value, the controller gain, and the adjusted value.

The sway force offset can be calculated based on: $\Delta F_{ey} = F_{ex} * K_{x2y} \tan(\delta)$.

$\Delta F_{ey}$ is the sway force offset, $F_{ex}$ is the surge environmental force, $K_{x2y}$ is an offset gain, and $\delta$ is the operator offset angle.

The memory can have stored thereon computer-executable instructions which, when executed by the processor, cause the processor to perform operations comprising: calculating the offset gain based on a sway wind force coefficient and a surge wind force coefficient.

The offset gain can be calculated based on:

$$K_{x2y} \cong \frac{C_{wy}(90°)}{C_{wx}(0°)}.$$

$K_{x2y}$ is the offset gain, $C_{wy}$ is the sway wind force coefficient, and $C_{wx}$ is the surge wind force coefficient.

The memory can have stored thereon computer-executable instructions which, when executed by the processor, cause the processor to perform operations comprising: comparing the heading offset angle to a limit; and selecting the heading offset angle as the limit if the heading offset angle is greater than the limit.

The memory can have stored thereon computer-executable instructions which, when executed by the processor, cause the processor to perform operations comprising calculating: calculating, a value of a multiplier based on a wind speed divided by a surge environmental force; determining a value of a adjusted value, wherein the value of the adjusted value is: equal to the value of the multiplier if an absolute value of the multiplier is less than one; or equal to one if the absolute value of the multiplier is greater than one; and calculating the multiplied value based on a product of the sum value, the controller gain, and the adjusted value.

The multiplier can be calculated based on:

$$\kappa = \left| \frac{V_{nom}}{F_{ex}} \right|.$$

($\kappa$) is the multiplier, $V_{nom}$ is the wind speed, and $F_{ex}$ is the surge environmental force.

The memory can have stored thereon computer-executable instructions which, when executed by the processor, cause the processor to perform operations comprising calculating the multiplier when the wind speed exceeds a predetermined velocity.

The dynamic positioning system can comprise a measurement system that is configured to measure weather conditional data, the memory having stored thereon computer-executable instructions which, when executed by the processor, cause the processor to perform operations comprising calculating the one or more measured values of sway environmental force based on the weather conditional data. The weather conditional data can include wind speed and direction.

The dynamic positioning system can comprise a thruster system. The thruster system can comprise at least one of a tunnel thruster, an azimuth thruster, a rudders, a propeller, a water jet, and a cycloidal propeller.

In one embodiment a controller for a dynamic positioning system comprises: a processor; and a memory having stored thereon computer-executable instructions which, when executed by the processor, cause the processor to perform operations comprising: calculating, by the processor: a sum value based on a sum of one or more measured values of sway environmental force; a multiplied value based on a product of the sum value and a controller gain; a heading offset angle based on an integral of the multiplied value over time; and an aim heading based on a sum of an initial heading and the heading offset angle.

Further features and advantages of the disclosure, as well as the structure and operation of various embodiments of the disclosure, are described in detail below with reference to the accompanying drawings. It is noted that the disclosure is not limited to the specific embodiments described herein. Such embodiments are presented herein for illustrative purposes only. Additional embodiments will be apparent to persons skilled in the relevant art(s) based on the teachings contained herein.

## IV. Brief Description of the Drawings

The accompanying drawings, which are incorporated herein and form part of the specification, illustrate the present disclosure and, together with the description, further serve to explain the principles of the disclosure and to enable a person skilled in the relevant art(s) to make and use the disclosure.

FIG. 1 is a block diagram depicting a DP system in accordance with an exemplary embodiment.
FIG. 2 is a block diagram of a controller of the DP system of FIG. 1.
FIG. 3 is an illustration depicting a vessel including the DP system of FIG. 1 in accordance with an exemplary embodiment.
FIG. 4 is a block diagram depicting an application of the controller of FIG. 2.

## V. Detailed Description

While the present disclosure is described herein with illustrative embodiments for particular applications, it should be understood that the disclosure is not limited thereto. Those skilled in the art with access to the teachings provided herein will recognize additional modifications, applications, and embodiments within the scope thereof and additional fields in which the disclosure would be of significant utility.

Unless defined otherwise, technical and scientific terms used herein have the same meaning as is commonly understood by one of ordinary skill in the art to which this disclosure belongs. The terms "first," "second," and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean either, any, several, or all of the listed items. The use of "including," "comprising," or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect. The terms "circuit," "circuitry," and "controller" may include either a single component or a plurality of components, which are either active and/or passive components and may be optionally connected or otherwise coupled together to provide the described function.

It should be noted that the simulation, synthesis and/or manufacture of the various embodiments of this disclosure can be accomplished, in part, through the use of computer readable code, including general programming languages (such as C or C++), hardware description languages (HDL) including Verilog HDL (VHDL), Altera HDL (AHDL), interactive languages, and the like, or other available programming and/or schematic capture tools (such as circuit capture tools).

A vessel moves on three translational axes, specifically surge (X), sway (Y), and heave (Z). Additionally a vessel has three rotational axes roll ($\phi$), pitch ($\theta$), and heading (also known as yaw) ($\psi$). A DP system is a fully automatic system designed to maintain desired position (X,Y) and a desired heading angle ($\psi$) of vessels.

Vessels that utilize DP include survey vessels, drilling ships, work boats, semi-submersible rigs, diving support vessels, cable layers, pipe-laying vessels, shuttle tankers, trenching and dredging vessels, supply vessels, and floating, production, storage and offloading vessels (FPSOs).

The principle of a DP system is based on feedback from sensors and other measuring devices which report motion variables, as well as environmental forces caused by wind or current. A DP system strives to eliminate disruptions to the position and heading angle of a vessel based on coordinated use of the thrusters. The thruster power demand is computed from estimates of the environmental forces and the difference between a desired and estimated position and heading of the vessel.

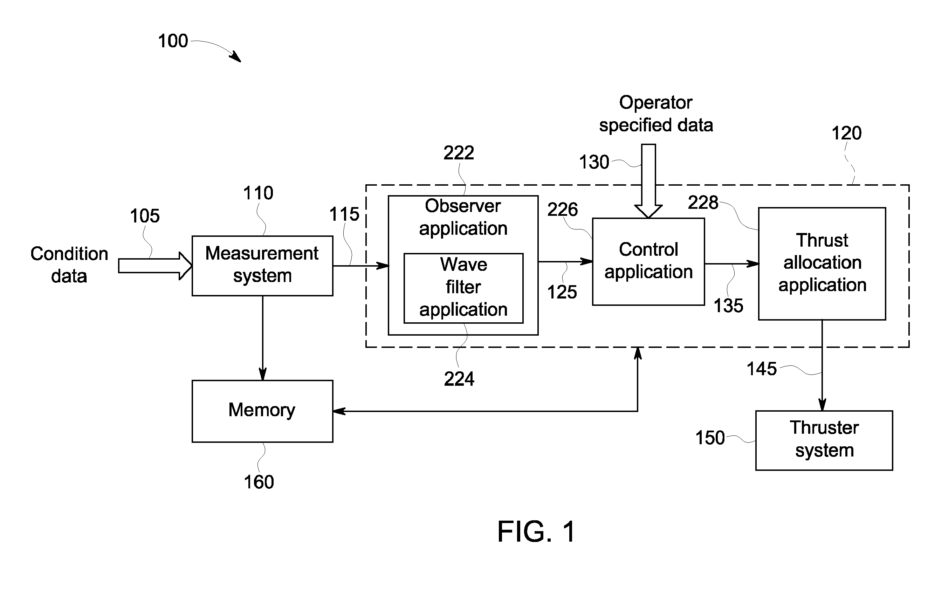

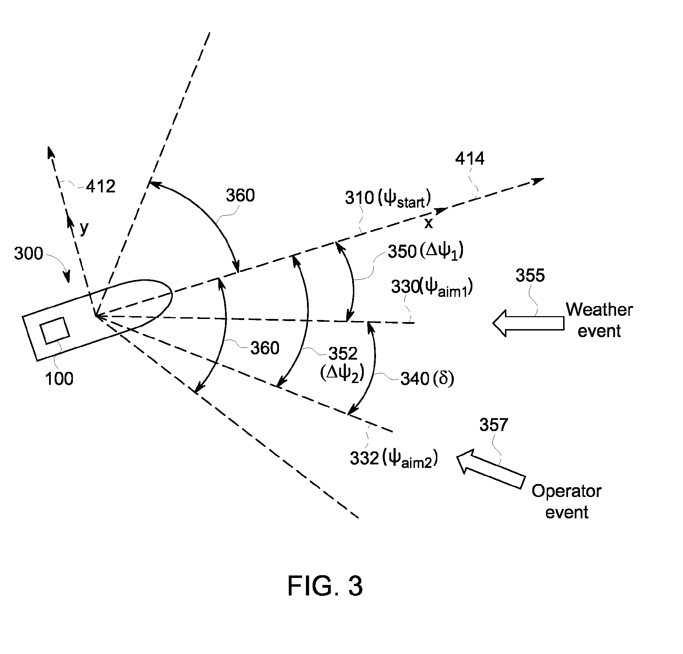

FIG. 1 is a block diagram depicting an exemplary embodiment of a DP system 100 for a vessel 300 (see FIG. 3). The DP system 100 includes a measurement system 110, a DP controller 120, and a thruster system 150. The DP controller 120 is configured to receive data (e.g., a measurement signal 115) from the measurement system 110, to receive data from an operator (e.g., operator specified data 130), to generate a thruster control signal 145 that is based on the data, and to transmit the thruster control signal 145 to the thruster system 150.

The information transmitted by signals 115 and 145 may be integrated with other internal or external subsystems to share or streamline information sent to and from the DP controller 120. Any information received into, calculated within, or transmitted from the DP controller 120 may be transmitted and stored in a memory repository 160.

It is understood by one skilled in the art that the DP system 100 may include one or more other devices and components. Additional redundancies may be included in the DP system 100 to allow the system to main its position and heading while in DP mode if there is a failure of the thrusters, generator, power bus, controller, or position reference systems.

The DP system 100 may contain components such a control panel for monitoring and input, levers for manual control, a processor to send and receive signals, a controller for DP control, or any other device, which aids in the control of the vessel. The DP system 100 may allow manual or remote control of main propulsion, thruster(s), and steering gear of the vessel 300. The DP controller 120 may also be configured with multiple control panels or controllers to allow access from different locations within the vessel 300. The DP system 100 can be designed to minimize human interaction when changing vessel operation between manual and DP modes.

Additional input/output systems (I/O systems) may also be used to receive information from and provide information to the DP controller 120. These I/O systems and firmware may include but are not limited to relay drive outputs per relay, indicator outputs, and logic outputs.

The measurement system 110 measures or receives vessel position data and vessel heading data (collectively, vessel condition data). The measurement system 110 is also equipped to measure or receive weather condition data, for example wind speed and direction. The vessel condition data and the weather condition data are collectively referred to as condition data 105.

The condition data 105 can be a computer readable code disposed in any known computer usable medium including semiconductor, magnetic disk, optical disk (such as CD-ROM, DVD-ROM) and as a computer data signal embodied in a computer usable (e.g., readable) transmission medium (such as a carrier wave or any other medium including digital, optical, or analog-based medium). As such, the code can be transmitted over communication networks including the Internet and intranets.

The measurement system 110 can include or receive from one or more measuring devices (not shown) working together or independently to measure the position and heading of the vessel 300. The measuring devices can be any device that is designed to receive information. The measuring devices are positioned at various sites on the vessel 300, such as but not limited to the deck. If multiple measuring devices are in use, the devices can be independent of each other, such that the failure of one device does not affect any other device. Measurements are taken from the measuring devices at a certain interval of time, i.e. a time cycle, which can be altered or variable based on specific application needs; for example, time cycles are between one hundred milliseconds and ten seconds.

The measuring devices can be sensors such as motion reference units, vertical reference units, wind sensors, or draught sensors; position measurement equipment such as Fanbeam, Cyscan, RadaScan, taut wire, satellite navigation, inertial navigation, or acoustic positioning; and/or heading measuring equipment such as gyrocompasses. The condition data 105 received into the measurement system 110 can include variables such as wind velocity, swell, surface current, surge current, tidal current, wave velocity, wave drift, wave force frequency, and wave force train.

The measurement system 110 may include a processor, which sends the measurement signal 115 to the DP controller 120. The measurement signal 115 may contain position and heading data (more generally, condition data 105) collected from the measuring devices. The measurement signal 115 can also optionally transmit the measurement data information to a memory repository 160 for storage. The memory repository 160 may include random access memory (RAM), read only memory (ROM), or other suitable data storage. The memory repository 160 may also be located internal or external to the DP system 100 and may be housed at an offsite location where data is transmitted through a communications network or similar structure.

The thruster system 150 may be powered by an internal or external power supply (not shown). The thruster system 150 includes thrusters to apply control action for maintaining the vessel position and heading. For example, the thruster system 150 may include one or more tunnel thrusters, azimuth thrusters, rudders, propellers, water jets, cycloidal propellers or any combination thereof. The thruster(s) may contain one or more propellers and be internally mounted (tunnel) or externally mounted (retractable) to the vessel. Each thruster within the thruster system 150 may function independently or in conjunction with the other thruster(s).

DP CONTROLLER

The DP controller 120 may be a microcontroller, microprocessor, programmable logic controller (PLC), complex programmable logic device (CPLD), field-programmable gate array (FPGA), or the like. The DP controller 120 may use code libraries, static analysis tools, software, hardware, firmware, or the like. After reading this description, it will become apparent to a person skilled in the relevant art how to implement the disclosure using other computer systems and/or computer architectures.

It is understood that the functions accomplished and/or structure provided by the systems and techniques described above can be represented in a core (such as a GPU core) that is embodied in program code and can be transformed to hardware as part of the production of integrated circuits.

Referring to FIGs. 1-4, the DP controller 120 is described in further detail. Referring to FIG. 1, the DP controller 120 is configured to determine or calculate position, heading, and environmental forces; calculate an aim heading; and convert the aim heading into thrust demands.

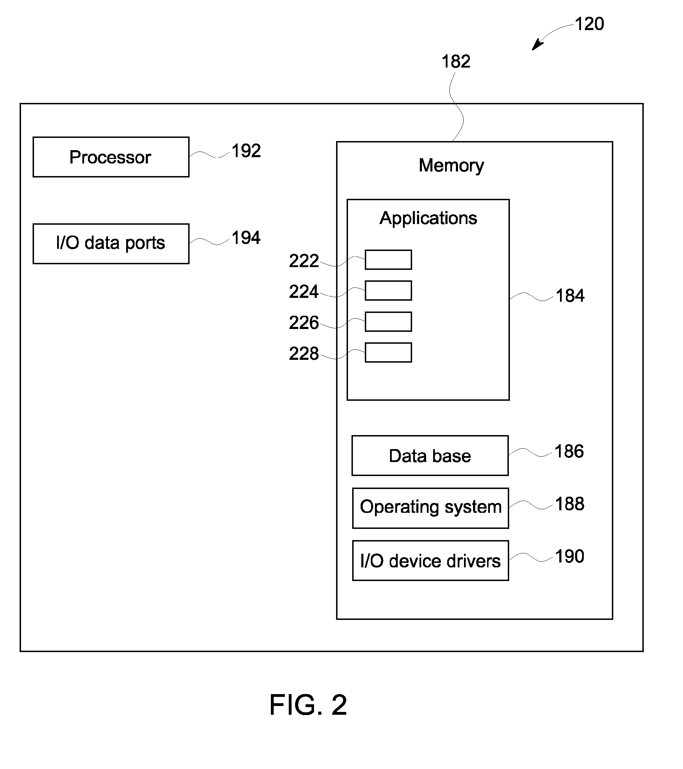

Referring to FIG. 2, the DP controller 120 includes a memory 182. The memory 182 may include several categories of software and data used in the DP controller 120, including, applications 184, a database 186, an operating system (OS) 188, and input/output (I/O) device drivers 190.

As will be appreciated by those skilled in the art, the OS 188 may be any operating system for use with a data processing system. The I/O device drivers 190 may include various routines accessed through the OS 188 by the applications 184 to communicate with devices, and certain memory components. The applications 184 can be stored in the memory 182 and/or in a firmware (not shown) as executable instructions, and can be executed by a processor 192. The applications 184 include various programs that, when executed by the processor 192, implement the various features of the DP controller 120, including applications described below. The applications 184 may be applied to data stored in the database 186, such as the specified parameters, along with data, e.g., received via the I/O data ports 194. The database 186 represents the static and dynamic data used by the applications 184, the OS 188, the I/O device drivers 190 and other software programs that may reside in the memory 182.

While the memory 182 is illustrated as residing proximate the processor 192, it should be understood that at least a portion of the memory 182 can be a remotely accessed storage system, for example, a server on a communication network, a remote hard disk drive, a removable storage medium, combinations thereof, and the like. Thus, any of the data, applications, and/or software described above can be stored within the memory 182 and/or accessed via network connections to other data processing systems (not shown) that may include a local area network (LAN), a metropolitan area network (MAN), or a wide area network (WAN), for example.

It should be understood that FIG. 2 and the description above are intended to provide a brief, general description of a suitable environment in which the various aspects of some embodiments of the present disclosure can be implemented. While the description refers to computer-readable instructions, embodiments of the present disclosure also can be implemented in combination with other program modules and/or as a combination of hardware and software in addition to, or instead of, computer readable instructions.

The term "application," or variants thereof, is used expansively herein to include routines, program modules, programs, components, data structures, algorithms, and the like. Applications can be implemented on various system configurations, including single-processor or multiprocessor systems, minicomputers, mainframe computers, personal computers, hand-held computing devices, microprocessor-based, programmable consumer electronics, combinations thereof, and the like.

The applications 184 include an observer application 222, a wave filter application 224, a control application 226, and a thrust allocation application 228, described in further detail below.

Referring to FIG. 1, the observer application 222 uses system control inputs and sequential measurements (e.g. measurement signal 115 received from the measurement system 110) to estimate the varying states of the DP system 100. For example, the DP controller 120 receives position and heading data transmitted from measurement system 110 via the measurement signal 115.

The observer application 222 uses the measurement signal 115 to estimate vessel position and heading, vessel velocity, vessel rate of turn and environmental forces acting on the vessel. This sensor/data fusion approach allows the observer application 222 to calculate the best estimate of position and heading for the vessel and an estimate of the weather forces acting on the vessel. The observer application 222 may be implemented as a single program, which provides estimates for the surge, sway, and yaw axes, as individual programs for each axis, or a combination thereof.

The observer application 222 includes a time-based method for determining the heading and position of the vessel in a two-step process, i.e., a prediction step and a weighted average step. In the prediction step, the observer application 222 produces an estimate of the state variables (e.g., positions, velocities and environmental forces), along with their uncertainties for a current time cycle. Once the measurements from the next time cycle are observed, the estimate is updated using a weighted average of the measurement device values. The weights are calculated from a measure of the estimated uncertainty of the prediction of the system's state and the estimated uncertainty of the measurements. The result of the weighted average is a new state estimate that lies between the predicted and measured state.

In certain embodiments, the observer application 222 includes the wave filter application 224, which removes the measurement noise associated with the frequency of waves passing the vessel, i.e. wave motions, received from the measurement system 110. Wave motions are oscillatory, for example, as a crest of a wave passes the vessel, the vessel is moved in a direction, then as a trough of the wave passes the vessel moves back in an opposite direction. Therefore, the vessel moves in an oscillatory motion about a fixed point. Such oscillatory motion may be removed from the vessel condition data to ensure that the control application 226 does not calculate large oscillating thruster force demands.

In certain embodiments, the observer application 222 operates in the form of a Kalman filter or other LQE program.

The observer application 222 transmits calculated data to the control application 226 via the control signal 125 or saves the calculated data in the memory 182 where it can be accessed by the control application 226. The control signal 125 may contain information received into the control application 226 to determine the thrust demand for the DP system 100, such as a side force calculation.

The control application 226 is configured to receive or access the control signal 125 from the observer application 222; to receive or access the operator specified data 130; to process the control signal 125 and the operator specified data 130 as described in further detail below; and to generate and transmit a control signal 135 (e.g., including thrust demands on each axis) to the thrust allocation application 228. The control signal 135 can alternatively be saved in the memory 182 where it can be accessed by the thrust allocation application 228.

CONTROL APPLICATION

The control application 226 is now described in further detail. It will be appreciated by one skilled in the art that the control application 226 could take the form of any suitable closed loop control paradigm, for example, three-term control (i.e., proportional integral derivative (PID) control), model-based control, state-variable feedback control, fuzzy control, or the like. It will also be appreciated that the control application 226 can make use of heading estimates, rate of turn estimates and yaw environmental force estimates from the observer application 222, or it can make use of heading measurements directly from the measurement system 110.

Referring to FIG. 3, the vessel 300 is briefly described in further detail. The vessel 300 has an initial heading 310 ($\psi_{start}$). The control application 226 calculates an aim heading ($\psi_{aim}$) (e.g., an optimal aim heading 330 ($\psi_{aim1}$) or an operator aim heading 332 ($\psi_{aim2}$)) based on the initial heading 310 ($\psi_{start}$) and a heading offset angle ($\Delta\psi$) (e.g., an optimal heading offset angle 350 ($\Delta\psi_1$) or an operator heading offset angle 352 ($\Delta\psi_2$)).

Generally, the heading offset angle ($\Delta\psi$) is continuously iterated to converge to a final heading offset angle ($\Delta\psi$) that reduces sway environmental forces 412 ($F_{ey}$) to zero. A direction at which sway environmental forces 412 ($F_{ey}$) are reduced to zero is represented by the optimal aim heading 330 ($\Delta\psi_{aim1}$). For example, the optimal aim heading 330 ($\psi_{aim1}$) that reduces sway environment forces to zero is in the direction of a weather event 355. The optimal heading offset angle 350 ($\Delta\psi_1$) is represented as the angle between the initial heading 310 ($\Delta\psi_{start}$) and the optimal aim heading 330 ($\psi_{aim1}$).

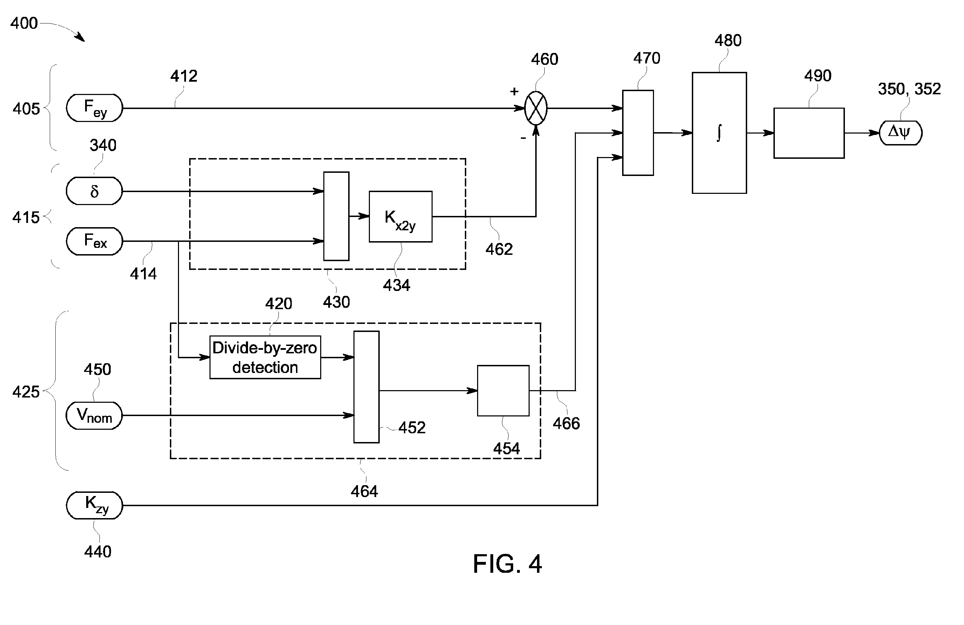

The heading offset angle ($\Delta\psi$) may also be based on an operator offset angle 340 ($\delta$) and heavy weather scaling as described in further below with respect to FIG. 4. For example, the operator offset angle 340 ($\delta$) is entered by an operator (e.g., operator specified data 130) and results in an angle measured from the optimal aim heading 330 ($\psi_{aim1}$) to the operator aim heading 332 ($\psi_{aim2}$). Here, the optimal aim heading 330 ($\psi_{aim1}$) is an "initial" aim heading and the operator aim heading 332 ($\psi_{aim2}$) is a "final" aim heading. For example, the optimal heading offset angle 350 using the optimal heading offset angle 350 ($\Delta\psi_1$) is calculated and the operator offset angle 340 ($\delta$) is then entered relative to the optimal aim heading 330 ($\psi_{aim1}$) to select the operator aim heading 332 ($\psi_{aim2}$). The calculation of the operator heading offset angle 352 ($\Delta\psi_2$) that is based on the operator offset angle 340 ($\delta$) is described in further detail below.

When calculating the operator heading offset angle 352 ($\Delta\psi_2$) the control application 226 takes into account certain of the operator specified data 130 including angle limits 360. The angle limits 360 are set by allowing the vessel 300 to move within a given range of angles defined in relation to the initial heading 310 ($\psi_{start}$) of the vessel 300. The range of angles includes an outer limit angle of $\pm$ L (depicted as reference number 360 in FIG. 3). Using the initial heading 310 ($\psi_{start}$) as a reference, angle limits 360 extend in either direction to create a boundary limit within which the aim heading ($\psi_{aim}$) may vary.

The calculation of the value of the heading offset angle ($\Delta\psi$) by the control application 226 is described in further detail in association with FIG. 4. FIG. 4 is an illustration depicting a block diagram 400 of a calculation of the heading offset angle ($\Delta\psi$) based on inputs from control signal 125 and operator specified data 130, including environmental force data and operator input data.

The control application 226 calculates the heading offset angle ($\Delta\psi$) based on: (1) a base heading function 405, which calculates an optimal heading offset angle 350 ($\Delta\psi_1$) that reduces the sway environmental forces 412 ($F_{ey}$) felt on the vessel 300 (e.g., to calculate the optimal aim heading 330 ($\Delta\psi_{aim1}$)); (2) an imputed heading function 415, which modifies the optimal heading offset angle 350 ($\Delta\psi_1$) based on the operator offset angle 340 ($\delta$) (e.g., to offset the operator aim heading 332 ($\psi_{aim2}$) from the optimal aim heading 330 ($\psi_{aim1}$)); and (3) a stability function 425, which stabilizes the calculation of heading offset angle ($\Delta\psi$) during extreme weather events.

The control application 226 may perform the base heading function 405 to maximize efficiency of the vessel 300 fuel consumption or minimize the environmental effects on the vessel 300. The base heading function 405 contributes to a calculation of the final heading offset angle ($\Delta\psi$) by first creating a sum value 460 that sums any weighted values of the sway environmental forces 412 ($F_{ey}$). The sway environmental forces 412 ($F_{ey}$) are obtained from the observer application 222 based on measurements of the measurement signal 115.

The sum value 460 is then multiplied by the controller gain 440 ($K_{zy}$) to calculate a multiplied value 470. The controller gain 440 ($K_{zy}$) has units of (angle/force*time) and the sum value 460 has units of (angle/time). The multiplied value 470 is then integrated with respect to time to produce an integral value 480. The integral value 480 has units of (angle). The integral value 480 is the heading offset angle ($\Delta\psi$) unless it is limited, if needed, based on the angle limits 360 by an angle limit filter 490. If limited at the angle limit filter 490, the heading offset angle 350 ($\Delta\psi$) is the value of the limit 360.

For purposes of teaching, the heading offset angle ($\Delta\psi$) that is calculated by the base heading function 405 alone is the optimal heading offset angle 350 ($\Delta\psi_1$). Once the optimal heading offset angle 350 ($\Delta\psi_1$) is calculated by the control application 226, the control application 226 calculates the optimal aim heading 330 ($\psi_{aim1}$) as equal to the initial heading 310 ($\psi_{start}$) plus the optimal heading offset angle 350 ($\Delta\psi_1$). The optimal aim heading 330 ($\psi_{aim1}$) is displayed to an operator.

An operator can modify the optimal aim heading 330 ($\psi_{aim1}$) to select an operator aim heading 332 ($\psi_{aim2}$) by specifying the operator offset angle 340 ($\delta$). If the operator specifies the operator offset angle 340 ($\delta$), the operator heading offset angle 352 ($\Delta\psi_2$) is calculated based on the base heading function 405 and the imputed heading function 415.

The imputed heading function 415 uses the operator offset angle 340 ($\delta$) as input to generate a sway force offset 462 ($\Delta F_{ey}$) that modifies the sum value 460. The computation 430 of the sway force offset 462 ($\Delta F_{ey}$) uses the tangent of the operator offset angle 340 ($\delta$) multiplied by the estimated surge environmental force 414 ($F_{ex}$), and multiplied by an offset gain 434 $K_{x2y}$. The sway force offset 462 ($\Delta F_{ey}$) is defined as follows:

$$\Delta F_{ey} = F_{ex} * K_{x2y} \tan(\delta).$$

The offset gain 434 ($K_{x2y}$) may be a constant which is preset or it may be calculated from the comparison of the wind force coefficient for sway at 90° ($C_{wy}$) and wind force coefficient for surge at 0° ($C_{wx}$). The offset gain 434 ($K_{x2y}$) is defined by:

$$K_{x2y} \cong \frac{C_{wy}(90°)}{C_{wx}(0°)}.$$

The wind force coefficients will be dependent on the vessel characteristics, such as vessel size and side profile.

The sway force offset 462 ($\Delta F_{ey}$) is subtracted from the sway environmental forces 412 ($F_{ey}$) to calculate the sum value 460, which is then used to calculate the operator heading offset angle 352 ($\Delta\psi_2$) as described above with respect to the base heading function 405. In essence, the sway force offset 462 is an artificial sway environmental force that moves the perceived direction of a weather event 355 to a direction of an operator event 357.

Using the observed sway environmental force 412 ($F_{ey}$) to drive the calculation of the heading offset angle ($\Delta\psi$) in heavier weather can cause the aim heading ($\psi_{aim}$) to change so quickly that the DP controller 120 can become unstable. In order to prevent an unstable aim heading ($\psi_{aim}$) calculation, the stability function 425 adjusts the controller gain 440 ($K_{zy}$) to reduce the rate of change of aim heading ($\psi_{aim}$). For example, the controller gain 440 ($K_{zy}$) is reduced such that the calculated aim heading ($\psi_{aim}$) converges more slowly toward a final aim heading ($\psi_{aim}$).

The stability function 425 multiplies the controller gain 440 ($K_{zy}$) by a stability adjusted value 466 that is generated through a stability application 464. The stability application 464 generates the stability adjusted value 466 by first calculating a multiplier 452 ($\kappa$). The multiplier 452 ($\kappa$) is based on a nominal wind speed 450 ($V_{nom}$) and the surge environmental force 414 ($F_{ex}$). The value of the nominal wind speed 450 ($V_{nom}$) can be preset by the operator specified data 130. To prevent the surge environmental force 414 ($F_{ex}$) from being divided by zero, the control application 226 includes a divide-by-zero detection function 420.

The multiplier 452 ($\kappa$) is derived by taking into account the relationship between the nominal wind speed 450 ($V_{nom}$) and the surge environmental force 414 ($F_{ex}$). Specifically, the multiplier 452 ($\kappa$) is defined by:

$$\kappa = \left| \frac{V_{nom}}{F_{ex}} \right|.$$

According to a multiplier selection 454, the stability adjusted value 466 is equal to the value of the multiplier 452 ($\kappa$) if the multiplier 452 ($\kappa$) is less or equal to one. Otherwise, the stability adjusted value 466 is one if the multiplier 452 ($\kappa$) is greater than one. Accordingly, the controller gain 440 ($K_{zy}$) is adjusted as follows when calculating the multiplied value 470:

$$K'_{zy} = K_{zy} * \kappa, \qquad \text{if } \kappa \leq 1$$

or

$$K'_{zy} = K_{zy}, \qquad \text{if } \kappa > 1.$$

Particularly, the adjusted value 466 is multiplied with the controller gain 440 ($K_{zy}$) to form the multiplied value 470. The multiplied value 470 is then used as above to calculate the heading offset angle ($\Delta\psi$).

Alternatively, the stability adjusted value 466 may be specified by an operator, for example, when the wind speed exceeds a preset or predetermined value of nominal wind speed 450 ($V_{nom}$).

Once the heading offset angle ($\Delta\psi$) is calculated by the control application 226, the control application 226 calculates the aim heading ($\psi_{aim}$) as equal to the initial heading 310 ($\psi_{start}$) plus the heading offset angle ($\Delta\psi$).

Once the aim heading ($\psi_{aim}$) is calculated, the control application 226 calculates a turning moment demand for maintaining the heading of the vessel 300 at the aim heading ($\psi_{aim}$) using estimates of heading, rate of turn and yaw environmental force provided by the observer application 222. The estimates of heading, rate of turn and yaw environmental force are multiplied by appropriate gains and the results are added to provide a turning moment demand for yaw. The calculated turning moment demand is passed to the thrust allocation application 228 as part of the control signal 135.

The thrust allocation application 228 converts the thrust demands on each axis of the vessel 300 into thrust allocation and direction demands for each individual thruster or propulsion device. The calculated thrust allocation and direction demands are sent via a thruster control signal 145 to the thruster system 150 for implementation.

It is to be appreciated that the Detailed Description section, and not the Summary and Abstract sections, is intended to be used to interpret the claims. The Summary and Abstract sections may set forth one or more but not all exemplary embodiments of the present disclosure as contemplated by the inventor(s), and thus, are not intended to limit the present disclosure and the appended claims in any way.

**Claims**

1. A dynamic positioning system (100), comprising a controller (120), comprising:

   a processor (192); and
   a memory (182) having stored thereon computer-executable instructions which, when executed by the processor (192), cause the processor (192) to perform operations comprising:

   calculating, by the processor (192):

   a sum value based on a sum of one or more measured values of sway environmental force;
   a multiplied value based on a product of the sum value and a controller gain;
   a heading offset angle based on an integral of the multiplied value over time; and
   an aim heading based on a sum of an initial heading and the heading offset angle.

2. A dynamic positioning system (100) according to claim 1, the memory (182) having stored thereon computer-executable instructions which, when executed by the processor (192), cause the processor (192) to perform operations comprising generating a thruster control signal (145) based on the aim heading.

3. A dynamic positioning system (100) according to claim 1, the memory (182) having stored thereon computer-executable instructions which, when executed by the processor (192), cause the processor (192) to perform operations comprising:

   calculating a sway force offset based on a tangent of an operator offset angle multiplied by a measured value of surge environmental force;
   calculating the sum value based on a sum of:

   the one or more measured values of sway environmental force; and
   the sway force offset.

4. A dynamic positioning system (100) according to claim 3, the memory (182) having stored thereon computer-executable instructions which, when executed by the processor (192), cause the processor (192) to perform operations comprising:

   calculating an offset gain based on a sway wind force coefficient and a surge wind force coefficient; and
   calculating the sway force offset based on the tangent of the operator offset angle, multiplied by the measured value of surge environmental force, and multiplied by the offset gain.

5. A dynamic positioning system (100) according to claim 3, the memory (182) having stored thereon computer-executable instructions which, when executed by the processor (192), cause the processor (192) to perform operations comprising calculating:

   calculating, a value of a multiplier based on a wind speed divided by the surge environmental force;
   determining a value of an adjusted value, wherein the value of the adjusted value is:

   equal to the value of the multiplier if an absolute value of the multiplier is less than one; or
   equal to one if the absolute value of the multiplier is greater than one; and

   calculating the multiplied value based on a product of the sum value, the controller gain, and the adjusted value.

**6.** A dynamic positioning system (100) according to claim 3 or claim 4, wherein the sway force offset is calculated based on:

$$\Delta F_{ey} = F_{ex} * K_{x2y} \tan(\delta)$$

wherein $\Delta F_{ey}$ is the sway force offset, $F_{ex}$ is the surge environmental force, $K_{x2y}$ is an offset gain, and $\delta$ is the operator offset angle.

**7.** A dynamic positioning system (100) according to claim 6, the memory (182) having stored thereon computer-executable instructions which, when executed by the processor (192), cause the processor (192) to perform operations comprising:

calculating the offset gain based on a sway wind force coefficient and a surge wind force coefficient.

**8.** A dynamic positioning system (100) according to any of claims 4, 6 and 7, wherein the offset gain is calculated based on:

$$K_{x2y} \cong \frac{C_{wy}(90^\circ)}{C_{wx}(0^\circ)}$$

wherein $K_{x2y}$ is the offset gain, $C_{wy}$ is the sway wind force coefficient, and $C_{wx}$ is the surge wind force coefficient.

**9.** A dynamic positioning system (100) according to claim 1, the memory (182) having stored thereon computer-executable instructions which, when executed by the processor (192), cause the processor (192) to perform operations comprising:

comparing the heading offset angle to a limit; and
selecting the heading offset angle as the limit if the heading offset angle is greater than the limit.

**10.** A dynamic positioning system (100) according to claim 1, the memory (182) having stored thereon computer-executable instructions which, when executed by the processor (192), cause the processor (192) to perform operations comprising calculating:

calculating, a value of a multiplier based on a wind speed divided by a surge environmental force;
determining a value of an adjusted value, wherein the value of the adjusted value is:

equal to the value of the multiplier if an absolute value of the multiplier is less than one; or
equal to one if the absolute value of the multiplier is greater than one; and calculating the multiplied value based on a product of the sum value, the controller gain, and the adjusted value.

**11.** A dynamic positioning system (100) according to claim 5 or claim 10, wherein the multiplier is calculated based on:

$$\kappa = \left| \frac{V_{nom}}{F_{ex}} \right|$$

wherein ($\kappa$) is the multiplier, $V_{nom}$ is the wind speed, and $F_{ex}$ is the surge environmental force.

**12.** A dynamic positioning system (100) according to claim 11, the memory (182) having stored thereon computer-executable instructions which, when executed by the processor (192), cause the processor (192) to perform operations comprising calculating the multiplier when the wind speed exceeds a predetermined velocity.

**13.** A dynamic positioning system (100) according to claim 1, comprising a measurement system (110) that is configured to measure weather conditional data, the memory (182) having stored thereon computer-executable instructions which, when executed by the processor (192), cause the processor (192) to perform operations comprising calculating the one or more measured values of sway environmental force based on the weather conditional data.

**14.** A dynamic positioning system (100) according to claim 13, wherein the weather conditional data includes wind speed and direction.

**15.** A controller (120) for a dynamic positioning system (100), comprising:

a processor (192); and
a memory (182) having stored thereon computer-executable instructions which, when executed by the processor (192), cause the processor (192) to perform operations comprising:

calculating, by the processor (192):

a sum value based on a sum of one or more measured values of sway environmental force;
a multiplied value based on a product of the sum value and a controller gain;
a heading offset angle based on an integral of the multiplied value over time; and
an aim heading based on a sum of an initial heading and the heading offset angle.

EP 2 952 994 A1

Operator
specified data

| | | | |
|---|---|---|---|
| Condition data | 105 → | Measurement system 110 | 115 → |

222 — Observer application

226

130

228 — 120

Wave filter application
224

125

Control application

135

Thrust allocation application

Memory
160

145

150 — Thruster system

FIG. 1

120

182

Processor ⌇ 192

I/O data ports ⌇ 194

Memory

Applications

222 ⌇ ▭
224 ⌇ ▭
226 ⌇ ▭
228 ⌇ ▭

⌇ 184

Data base ⌇ 186

Operating system ⌇ 188

I/O device drivers ⌇ 190

FIG. 2

FIG. 3

FIG. 4

**Europäisches Patentamt**
**European Patent Office**
**Office européen des brevets**

# EUROPEAN SEARCH REPORT

Application Number

EP 14 17 1009

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 332 821 A1 (CONVERTEAM TECHNOLOGY LTD [GB]) 15 June 2011 (2011-06-15)<br>* paragraphs [0001] - [0005], [0011] - [0050]; claims 1-4,7-12; figures 1-6 * | 1-15 | INV.<br>G05D1/02<br>B63H25/42 |
| X | US 6 450 112 B1 (DEGHUEE BRADLEY J [US]) 17 September 2002 (2002-09-17)<br>* abstract; figures 1-3 *<br>* column 1, line 54 - column 13, line 14 * | 1-15 | |
| X | WO 2007/142537 A2 (CWF HAMILTON & CO LTD [NZ]; RAE PHILIP [NZ]; BORRETT JOHN ROBERT [NZ]) 13 December 2007 (2007-12-13)<br>* the whole document * | 1-15 | |
| A | KR 2013 0135137 A (CYTRONIQ CO LTD [KR]) 10 December 2013 (2013-12-10)<br>* the whole document * | 1-15 | |
| A | KR 2013 0135721 A (CYTRONIQ CO LTD [KR]) 11 December 2013 (2013-12-11)<br>* the whole document * | 1-15 | TECHNICAL FIELDS SEARCHED (IPC)<br><br>G05D<br>B63H |
| Y | EP 2 161 542 A1 (CONVERTEAM TECHNOLOGY LTD [GB]; IXSEA [FR]) 10 March 2010 (2010-03-10)<br>* the whole document * | 1-15 | |
| Y | WO 2012/080241 A1 (BLUEWATER ENERGY SERVICES BV [NL]; TJALLEMA ARJEN RENE [NL]; ROOS CORN) 21 June 2012 (2012-06-21)<br>* the whole document * | 1-15 | |
| A | US 5 152 239 A (HOSSFIELD ROBIN C [US] ET AL) 6 October 1992 (1992-10-06)<br>* column 1, line 19 - column 2, line 54 *<br>* column 3, line 19 - column 13, line 14; claims 1-12; figures 1-6 * | 1-15 | |

-/--

The present search report has been drawn up for all claims

| Place of search | Date of completion of the search | Examiner |
|---|---|---|
| Munich | 17 March 2015 | De Syllas, Dimitri |

EPO FORM 1503 03.82 (P04C01)

EP 2 952 994 A1

## EUROPEAN SEARCH REPORT

Application Number

EP 14 17 1009

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 741 474 A (KAWADA S ET AL) 26 June 1973 (1973-06-26) * the whole document * ----- | 1-15 | |

TECHNICAL FIELDS SEARCHED (IPC)

The present search report has been drawn up for all claims

| Place of search | Date of completion of the search | Examiner |
|---|---|---|
| Munich | 17 March 2015 | De Syllas, Dimitri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                   EP 14 17 1009

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2015

| Patent document cited in search report | | Publication date | Patent family member(s) | | Publication date |
|---|---|---|---|---|---|
| EP 2332821 | A1 | 15-06-2011 | AT | 544666 T | 15-02-2012 |
| | | | CN | 102791571 A | 21-11-2012 |
| | | | DK | 2332821 T3 | 14-05-2012 |
| | | | EP | 2332821 A1 | 15-06-2011 |
| | | | RU | 2012122310 A | 20-05-2014 |
| | | | US | 2013019790 A1 | 24-01-2013 |
| | | | WO | 2011072835 A1 | 23-06-2011 |
| US 6450112 | B1 | 17-09-2002 | NONE | | |
| WO 2007142537 | A2 | 13-12-2007 | AU | 2007256046 A1 | 13-12-2007 |
| | | | CA | 2654305 A1 | 13-12-2007 |
| | | | EP | 2024226 A2 | 18-02-2009 |
| | | | ES | 2467098 T3 | 11-06-2014 |
| | | | JP | 5200010 B2 | 15-05-2013 |
| | | | JP | 2009538782 A | 12-11-2009 |
| | | | KR | 20090029233 A | 20-03-2009 |
| | | | NZ | 573300 A | 28-10-2011 |
| | | | US | 2010023192 A1 | 28-01-2010 |
| | | | WO | 2007142537 A2 | 13-12-2007 |
| KR 20130135137 | A | 10-12-2013 | KR | 20130135024 A | 10-12-2013 |
| | | | KR | 20130135137 A | 10-12-2013 |
| KR 20130135721 | A | 11-12-2013 | NONE | | |
| EP 2161542 | A1 | 10-03-2010 | AT | 497147 T | 15-02-2011 |
| | | | BR | PI0903923 A2 | 20-07-2010 |
| | | | CN | 101665150 A | 10-03-2010 |
| | | | DK | 2161542 T3 | 18-04-2011 |
| | | | EP | 2161542 A1 | 10-03-2010 |
| | | | ES | 2362122 T3 | 28-06-2011 |
| | | | US | 2010088030 A1 | 08-04-2010 |
| WO 2012080241 | A1 | 21-06-2012 | NONE | | |
| US 5152239 | A | 06-10-1992 | NONE | | |
| US 3741474 | A | 26-06-1973 | NONE | | |

EPO FORM P0459

For more details about this annex : see Official Journal of the European Patent Office, No. 12/82